# EUROPEAN PATENT APPLICATION

(11) **EP 3 381 658 A1**
(43) Date of publication of application: **03.10.2018**
(21) Application number: 17172188.9
(22) Date of filing: 22.05.2017
(51) Int. Cl.: B29C 64/118, B29C 64/209, B33Y 30/00

(54) **THREE-DIMENSIONAL PRINTING NOZZLE STRUCTURE**

(30) Priority: 27.03.2017 CN 201710187704
(71) Applicant: XYZprinting, Inc., New Taipei City 22201 (TW); Kinpo Electronics, Inc., New Taipei City 22201 (TW)
(72) Inventor: HO, Kwan, 22201 Shenkeng Dist., New Taipei City (TW); WU, Chi-Chieh, 22201 SHENKENG DIST., NEW TAIPEI CITY (TW); WU, Chung-Hsuan, Shenkeng Dist., New Taipei City 22201 (TW)
(74) Representative: 2K Patentanwälte Blasberg Kewitz & Reichel

(57) **Abstract**

A three-dimensional printing nozzle structure (100) including a heater (110), a nozzle (120), a feed tube (130) and a baffle member (140) is provided. The heater has a first through hole (111). The nozzle is connected to the heater and has a second through hole (121). The feed tube passes through the first through hole and has a feed channel.(131) The first through hole, the second through hole and the feed channel are aligned with each other. A filament (20) moves along the feed channel to pass through the heater. The heater heats and melts the filament, and the filament that has been melted moves from the feed channel into the second through hole to be extruded. The baffle member is disposed inside the first through hole and located between the feed channel and the second through hole. The baffle member is configured to adjust a degree of communication between the feed channel and the second through hole.

## Description

### BACKGROUND OF THE INVENTION

### [Field of the Invention]

The invention relates to a nozzle structure and particularly relates to a three-dimensional printing nozzle structure.

### [Description of Related Art]

three-dimensional printing technology is in fact a collective name for a series of Rapid Prototyping (RP) technologies. The fundamental principle of all such technologies is additive manufacturing: a RP machine forms a cross-sectional shape of a workpiece in the X-Y plane by scanning and generates layer thickness intermittently in the Z coordinate so that finally a three-dimensional object is formed. The three-dimensional printing technology does not set limitations on the geometric shape of the printed object. The more complex the object, the better the excellence of RP technologies is demonstrated. Manpower and processing time can also be significantly saved. With the shortest time, three-dimensional printing is capable of presenting a digital three-dimensional model designed with CAD software truly and authentically.

To take a three-dimensional printer that adopts Fused Deposition Modeling (FDM) technology as an example, such printer heats a filament through the heater of the printing nozzle structure and then extrudes the filament that has been melted through the nozzle so as to perform printing onto the platform. During the process of three-dimensional printing, in response to changes of the printing path, it is necessary for the printing nozzle structure, depending on the situation, to draw back the filament and temporarily suspend the operation of extruding the filament that has been melted. However, the filament that has been melted may still drop onto the platform due to gravity, even onto the three-dimensional object to be molded, so as to affect the process yield.

### SUMMARY OF THE INVENTION

It is an object of the invention to provide a three-dimensional printing nozzle structure that enhances the process yield and the quality of the finished three-dimensional object.

This problem is solved by a three-dimensional printing nozzle structure as claimed in claim 1. Further advantageous embodiments are the subject-matter of the dependent claims.

In an embodiment of the invention, a three-dimensional printing nozzle structure includes a heater, a nozzle, a feed tube and a baffle member. The heater has a first through hole. The nozzle is connected to the heater. The nozzle has a second through hole, and the first through hole and the second through hole are aligned with each other. The feed tube passes through the first through hole. The feed tube has a feed channel, and the second through hole and the feed channel are aligned with each other. A filament moves along the feed channel to pass through the heater. The heater heats and melts the filament, and the filament that has been melted moves from the feed channel into the second through hole to be extruded. The baffle member is disposed inside the first through hole and located between the feed channel and the second through hole. The baffle member is configured to adjust a degree of communication between the feed channel and the second through hole.

According to a further embodiment of the invention, the feed tube includes an inner tube and an outer tube. The inner tube passes through the outer tube, and the outer tube is fixed to the first through hole.

According to a further embodiment of the invention, a material of the inner tube is Teflon and a material of the outer tube is stainless steel.

According to a further embodiment of the invention, a material of the baffle member is rubber.

According to a further embodiment of the invention, the baffle member includes a fixation portion and a flexible portion. The fixation portion is fixed between the feed channel and the second through hole, and the flexible portion is connected to the fixation portion.

According to a further embodiment of the invention, the feed channel and the second through hole delimit a moving path of the filament, and the baffle member is configured to block at least a portion of the moving path of the filament.

According to a further embodiment of the invention, the flexible portion and the fixation portion delimit a variable opening. When the flexible portion is pressed by the filament, the variable opening has a first opening area. When the filament is drawn back to the feed channel, the variable opening has a second opening area. The second opening area is smaller than the first opening area.

According to a further embodiment of the invention, the fixation portion is a ring-shaped structure. The flexible portion has at least one baffle body, and the at least one baffle body is connected to an inner wall surface of the fixation portion.

Based on the above, the three-dimensional printing nozzle structure of the invention is provided with the baffle member between the nozzle and the feed tube, and the baffle member is configured to adjust the degree of communication between the feed channel and the second through hole. When the filament is drawn back to the feed channel, the baffle body may decrease the degree of communication between the feed channel and the second through hole, thereby preventing the filament that has been melted from dropping onto the platform due to gravity, even onto the three-dimensional object to be molded. In other words, the three-dimensional printing nozzle structure of the invention is capable of enhancing the process yield and the quality of the finished three-dimensional object.

To make the aforementioned and other features and advantages of the invention more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate exemplary embodiments of the invention and, together with the description, serve to explain the principles of the invention.
FIG. 1 is a schematic view of a three-dimensional printing device in an embodiment of the invention.
FIG. 2 and FIG. 3 are respectively partial schematic cross-sectional views of the three-dimensional printing nozzle structure of FIG. 1.
FIG. 4 and FIG. 5 are schematic top views corresponding to the baffle member of FIG. 2 and FIG. 3 respectively.
FIG. 6 to FIG. 9 respectively illustrate schematic top views of a baffle member in other embodiments of the invention.

### DESCRIPTION OF THE EMBODIMENTS

In the following, some of the exemplary embodiments of the invention are described in detail with reference to the accompanying drawings. Whenever possible, the same reference numerals used in the accompanying drawings and the below description are viewed as indicating identical or similar components.

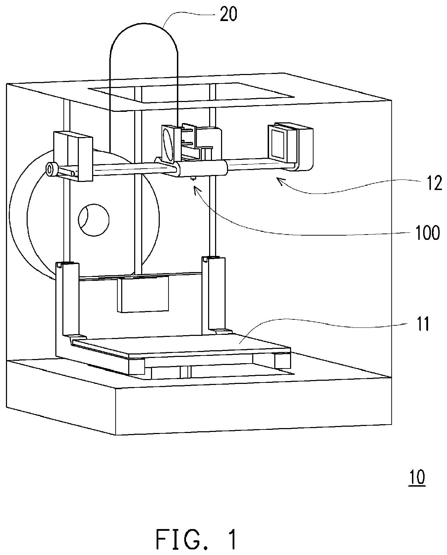

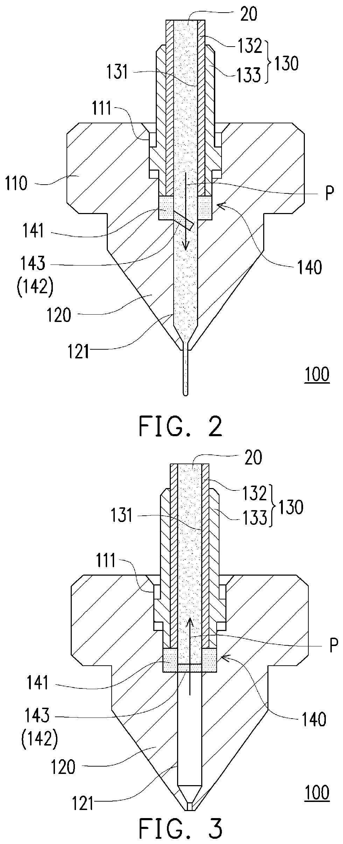

FIG. 1 is a schematic view of a three-dimensional printing device in an embodiment of the invention. FIG. 2 and FIG. 3 are respectively partial schematic cross-sectional views of the three-dimensional printing nozzle structure of FIG. 1. In FIG. 2, a filament 20 moves from a feed channel 131 into a second through hole 121. In FIG. 3, the filament 20 is drawn back to the feed channel 131. With reference to FIG. 1 to FIG. 3, in this embodiment, a three-dimensional printing device 10 includes a platform 11, a moving mechanism 12 and a three-dimensional printing nozzle structure 100. The moving mechanism 12 is disposed above the platform 11, and the three-dimensional printing nozzle structure 100 is disposed on the moving mechanism 12. The three-dimensional printing nozzle structure 100 is capable of being driven by the moving mechanism 12 to move relative to the platform 11 along the three axial directions X-Y-Z in space so as to print a three-dimensional object onto the platform 11. In other embodiments, the three-dimensional printing nozzle structure may be a portion of a three-dimensional printing pen.

Specifically, the three-dimensional printing nozzle structure 100 adopts Fused Deposition Modeling technology and includes a heater 110, a nozzle 120 and a feed tube 130 and a baffle member 140. The feed tube 130 is configured to transport a filament 20 and make the filament 20 passes through the heater 110 and the nozzle 120. After the heater 110 heats and melts the filament 20, the filament 20 that has been melted is extruded from the nozzle 120 and printed onto the platform 11 along a printing path. In this embodiment, the heater 110 and the nozzle 120 are connected to each other. The heater 110 is screwed to the nozzle 120, and the heather 110 and the nozzle 120 may be made of copper or other metals or alloys of high thermal conductivity. The heater 110 has a first through hole 111, the nozzle 120 has a second through hole 121, and the first through hole 111 and the second through hole 121 are aligned with each other. A special point to note is that in this invention, the fixing method between the heater and the nozzle is not limited to screwing. These two components may also be fixed by other appropriate methods.

The feed tube 130 passes through the first through hole 111. The feed tube 130 has a feed channel 131, and the second through hole 121 and the feed channel 131 are aligned with each other. Specifically, the filament 20 moves along the feed channel 131 to pass through the heater 110. At the same time, the heater 110 heats and melts the filament 20, and the filament 20 that has been melted moves from the feed channel 131 into the second through hole 121 to be extruded. In this embodiment, the feed tube 130 includes an inner tube 132 and an outer tube 133. Here the inner tube 132 passes through the outer tube 133, and the outer tube 133 is fixed to the first through hole 111. The feed channel 131 may be a channel inside the inner tube 132, and here the inner tube 132 may be made of Teflon and the outer tube 133 may be made of stainless steel. Because stainless steel and Teflon each have a heat transfer coefficient much lower than that of copper and are high temperature resistant, it is not easy for heat to pass through the feed tube 130 to transmit outwards when the heater 110 heats the filament 20 inside the feed tube 130. In this way, it is not only possible to prevent a user from accidentally being burned but also possible to prevent the filament 20 that is inside the inner tube 130 and has not passed through the heater 110 from being melted, thereby greatly reducing the chance of clogging the inner tube 130. In other embodiments, the material of the outer tube may be a metal or an alloy, but the invention is not limited thereto.

In this embodiment, the baffle member 140 is disposed inside the first through hole 111 and located between the feed channel 131 and the second through hole 121. As shown in FIG. 2 and FIG. 3, the feed tube 130 and the nozzle 120 respectively contact opposite two ends of the baffle member 140 so as to fix the baffle member 140 in-between. Specifically, the feed channel 131 and the second through hole 121 delimit a moving path P of the filament 20, and the baffle member 140 blocks at least a portion of the moving path P of the filament 20.

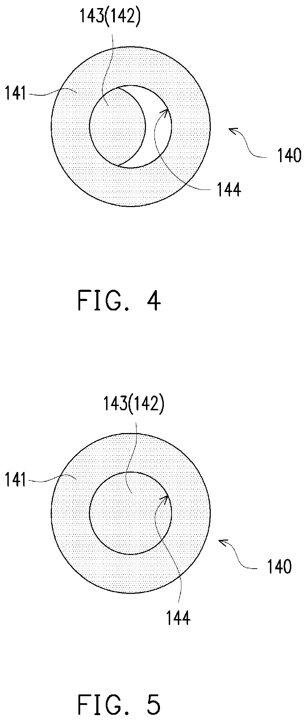

FIG. 4 and FIG. 5 are schematic top views corresponding to the baffle member of FIG. 2 and FIG. 3 respectively. With reference to FIG. 2 to FIG. 5, in this embodiment, the baffle member 140 includes a fixation portion 141 and a flexible portion 142 that is connected to the fixation portion 141. The fixation portion 141 is fixed between the feed channel 131 and the second through hole 121 (or fixed between the feed tube 130 and the nozzle 120), and the flexible portion 142 is connected to the fixation portion 141. The fixation portion 141 may be a ring-shaped structure. The flexible portion 142 may have a baffle body 143 that is connected to an inner wall surface of the fixation portion 141, and the baffle body 143 is configured to block at least a portion of the moving path P of the filament 20. Before the baffle body 143 is shifted or deformed, the feed channel 131 may be completely blocked from the second through hole 121 by the baffle body 143. On the other hand, the flexible portion 142 and the fixation portion 141 may delimit a variable opening 144. When the baffle body 143 is pressed by the filament 20, the variable opening 144 has a first opening area. When the filament 20 is drawn back to the feed channel 131, the variable opening 144 has a second opening area, which is smaller than the first opening area and may be equal to zero or close to zero. In other words, the baffle member 140 is configured to adjust a degree of communication between the feed channel 131 and the second through hole 121. Here the baffle member 140 may be made of rubber, and not only may receive a force to become bent and deformed but may also be high temperature resistant.

Before the filament 20 moves from the feed channel 131 into the second through hole 121, the baffle body 143 may completely block the moving path P of the filament 20. As shown in FIG. 2 and FIG. 4, after the baffle body 143 is pressed by the filament 20 that has been melted so as to become bent and deformed, the baffle body 143 only blocks at least a portion of the moving path P of the filament 20. As a result, the degree of communication between the feed channel 131 and the second through hole 121 is increased, enabling the filament 20 that has been melted to move from the feed channel 131 into the second through hole 121. During the process of three-dimensional printing, in response to changes of the printing path, it is necessary for the three-dimensional printing nozzle structure 100, depending on the situation, to draw back the filament 20 and temporarily suspend the operation of extruding the filament 20 that has been melted. As shown in FIG. 3 and FIG. 5, when the filament 20 is drawn back to the feed channel 131, the baffle body 143 may return to the state before it becomes bent and deformed, thereby decreasing the degree of communication between the feed channel 131 and the second through hole 121 or completely blocking the moving path P of the filament 20. The filament 20 that has been melted is thus prevented from dropping onto the platform 11 due to gravity, even onto the three-dimensional object to be molded. In other words, the three-dimensional printing nozzle structure 100 of this embodiment is capable of enhancing the process yield and the quality of the finished three-dimensional object.

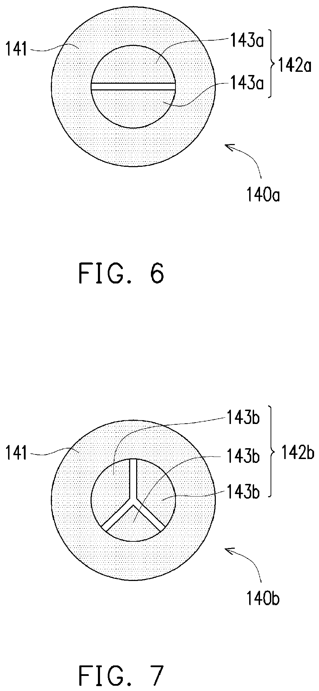

FIG. 6 to FIG. 9 respectively illustrate schematic top views of a baffle member in other embodiments of the invention. Here FIG. 6 to FIG. 9 respectively show the state of the flexible portion of the baffle member in different embodiments before it becomes bent and deformed. With reference to FIG. 6, a flexible portion 142a of a baffle member 140a has two baffle bodies 143a that approximate to semicircular shapes. A gap may be kept between the two baffle bodies 143a, or the two baffle bodies 143a may be jointed to each other. After the two baffle bodies 143a are pressed by a filament 20 that has been melted so as to become bent and deformed, the degree of communication between a feed channel 131 and a second through hole 121 is increased. Besides, when the filament 20 is drawn back to the feed channel 131, the baffle bodies 143a may return to the state before they become bent and deformed, thereby decreasing the degree of communication between the feed channel 131 and the second through hole 121.

With reference to FIG. 7, a flexible portion 142b of a baffle member 140b has three baffle bodies 143b that approximate to fan shapes. A gap may be kept between any adjacent two of the three baffle bodies 143b, or any adjacent two of the three baffle bodies 143b may be jointed to each other. After the three baffle bodies 143b are pressed by a filament 20 that has been melted so as to become bent and deformed, the degree of communication between a feed channel 131 and a second through hole 121 is increased. Besides, when the filament 20 is drawn back to the feed channel 131, the baffle bodies 143b may return to the state before they become bent and deformed, thereby decreasing the degree of communication between the feed channel 131 and the second through hole 121.

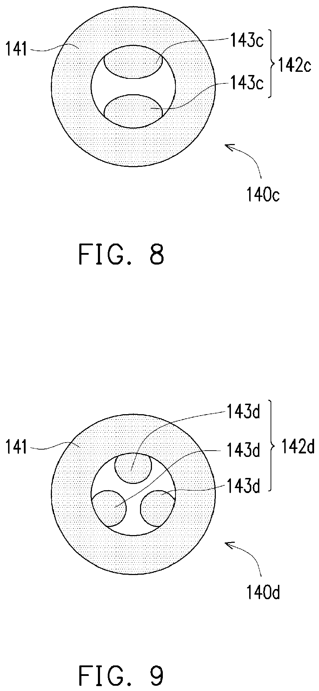

With reference to FIG. 8, a flexible portion 142c of a baffle member 140c has two baffle bodies 143c. A gap may be kept between the two baffle bodies 143c, and each of the two baffle bodies 143c has an arc-shaped flange. After the two baffle bodies 143c are pressed by a filament 20 that has been melted so as to become bent and deformed, the degree of communication between a feed channel 131 and a second through hole 121 is increased. Besides, when the filament 20 is drawn back to the feed channel 131, the baffle bodies 143c may return to the state before they become bent and deformed, thereby decreasing the degree of communication between the feed channel 131 and the second through hole 121.

With reference to FIG. 9, a flexible portion 142d of a baffle member 140d has three baffle bodies 143d. A gap may be kept between the three baffle bodies 143d, and each of the three baffle bodies 143d has an arc-shaped flange. After the three baffle bodies 143d are pressed by a filament 20 that has been melted so as to become bent and deformed, the degree of communication between a feed channel 131 and a second through hole 121 is increased. Besides, when the filament 20 is drawn back to the feed channel 131, the baffle bodies 143d may return to the state before they become bent and deformed, thereby decreasing the degree of communication between the feed channel 131 and the second through hole 121. A special point to note is that the shape and number of the baffle body in this invention are not limited to what is described in the forgoing embodiments and are adjustable depending on design needs.

In summary of the above, the three-dimensional printing nozzle structure of the invention is provided with the baffle member between the nozzle and the feed tube, and the flexible portion of the baffle member has at least one baffle body. Before the filament moves from the feed channel of the feed tube into the second through hole of the nozzle, the baffle body may block at least a portion of the moving path of the filament. After the baffle body is pressed by the filament that has been melted so as to become bent and deformed, the degree of communication between the feed channel and the second through hole is increased, thereby enabling the filament that has been melted to move from the feed tube into the second through hole. During the process of three-dimensional printing, in response to changes of the printing path, it is necessary for the three-dimensional printing nozzle structure, depending on the situation, to draw back the filament and temporarily suspend the operation of extruding the filament that has been melted. When the filament is drawn back to the feed channel, the baffle body may return to the state before it becomes bent and deformed, thereby decreasing the degree of communication between the feed channel and the second through hole. The filament that has been melted is thus prevented from dropping onto the platform due to gravity, even onto the three-dimensional object to be molded. In other words, the three-dimensional printing nozzle structure of the invention is capable of enhancing the process yield and the quality of the finished three-dimensional object.

## Claims

1. A three-dimensional printing nozzle structure (100), comprising:
a heater (110), having a first through hole (111);
a nozzle (120), connected to the heater (110), wherein
the nozzle (120) has a second through hole (121), and
the first through hole (111) and the second through hole (121) are aligned with each other;
a feed tube (130), passing through the first through hole (111), wherein
the feed tube (130) has a feed channel (131),
the second through hole (121) and the feed channel (131) are aligned with each other,
a filament (20) moves along the feed channel (131) to pass through the heater (110),
the heater (110) heats and melts the filament (20), and
the filament (20) that has been melted moves from the feed channel (131) into the second through hole (121) to be extruded; and
a baffle member (140, 140a, 140b, 140c, 140d), disposed inside the first through hole (111) and located between the feed channel (131) and the second through hole (121), wherein
the baffle member (140, 140a, 140b, 140c, 140d) is configured to adjust a degree of communication between the feed channel (131) and the second through hole (121).

2. The three-dimensional printing nozzle structure as claimed in claim 1, wherein
the feed tube (130) comprises an inner tube (131) and an outer tube (132),
the inner tube (131) passes through the outer tube (132), and
the outer tube (132) is fixed to the first through hole (111).

3. The three-dimensional printing nozzle structure as claimed in claim 1 or 2, wherein a material of the inner tube (131) is Teflon and a material of the outer tube (132) is stainless steel.

4. The three-dimensional printing nozzle structure as claimed in any of the preceding claims, wherein a material of the baffle member (140, 140a, 140b, 140c, 140d) is rubber.

5. The three-dimensional printing nozzle structure as claimed in any of the preceding claims, wherein
the baffle member (140, 140a, 140b, 140c, 140d) comprises a fixation portion (141) and a flexible portion (142, 142a, 142b, 142c, 142d),
the fixation portion (141) is fixed between the feed channel (131) and the second through hole (121), and
the flexible portion (142, 142a, 142b, 142c, 142d) is connected to the fixation portion (141).

6. The three-dimensional printing nozzle structure as claimed in claim 5, wherein
the feed channel (131) and the second through hole (121) delimit a moving path (P) of the filament (20), and
the baffle member (140, 140a, 140b, 140c, 140d) is configured to block at least a portion of the moving path (P) of the filament (20).

7. The three-dimensional printing nozzle structure as claimed in claim 5 or 6, wherein
the flexible portion (142, 142a, 142b, 142c, 142d) and the fixation portion (141) delimit a variable opening (144),
the variable opening (144) has a first opening area when the flexible portion (142, 142a, 142b, 142c, 142d) is pressed by the filament (20),
the variable opening (144) has a second opening area when the filament (20) is drawn back to the feed channel (131), and
the second opening area is smaller than the first opening area.

8. The three-dimensional printing nozzle structure as claimed in any of claims 5 to 7, wherein
the fixation portion (141) is a ring-shaped structure,
the flexible portion (142, 142a, 142b, 142c, 142d) has at least one baffle body (143, 143a, 143b, 143c, 143d), and
the at least one baffle body (143, 143a, 143b, 143c, 143d) is connected to an inner wall surface of the fixation portion (141).
